# FASCICULE DE BREVET EUROPEEN

(11) **EP 0 381 716 B1**
(45) Date de publication et mention de la délivrance du brevet: **14.09.1994**
(21) Numéro de dépôt: 89907644.2
(22) Date de dépôt: 20.07.1989
(51) Int. Cl.: F16D 25/08

(54) **DISPOSITIF DE COMMANDE D'EMBRAYAGE**
BETÄTIGUNGSEINRICHTUNG FÜR KUPPLUNG
CLUTCH CONTROL DEVICE

(30) Priorité: 21.07.1988 CH 2789/88
(43) Date de publication de la demande: 16.08.1990
(73) Titulaire: MEISTER BENELUX S.A., B-4032 CHENEE (BE)
(72) Inventeur: Cimarosti, Luigi, B-4170 Comblain-au-Pont (BE)
(74) Mandataire: Overath, Philippe
(86) Numéro de dépôt international: BE8900035
(87) Numéro de publication internationale: WO9001123

(56) Documents cités:
- EP-A- 0 095 841
- EP-A- 0 168 932
- WO-A-88/03235
- GB-A- 1 255 002
- GB-A- 2 062 799
- GB-A- 2 112 490
- US-A- 2 501 005
- US-A- 2 717 680
- US-A- 4 606 449

## Description

La présente invention se rapporte à un dispositif de commande hydraulique pour embrayage comprenant une butée de débrayage agissant sur les pièces rotatives de l'embrayage ainsi qu'un piston agissant sur la bague de la butée d'embrayage.

La grande majorité des voitures vendues dans le monde sont équipées d'un embrayage à un, ou éventuellement plusieurs disques de friction. Le disque de friction est monté sur l'arbre mené qui transmet la puissance moteur aux roues. L'arbre est cannelé à l'endroit ou est monté le disque, de façon à permettre à ce disque de glisser axialement le long de l'arbre. Le volant moteur, solidaire du vilebrequin, présente une surface correspondant à celle du disque et contre laquelle le disque doit venir se plaquer, en glissant le long des cannelures de l'arbre. Pour que le disque soit plaqué contre le volant, un plateau de pression solidaire rotativement du volant mais mobile axialement comme le disque, est placé de l'autre côté du disque. Des ressorts généralement à diaphragme, pressent ce plateau contre le disque, et plaquent ce dernier contre le volant. Dans cette position, le disque est serré entre le volant et le plateau, et le mécanisme est en position embrayée. Le débrayage se fait en tirant le plateau de pression en arrière. Ce mouvement est habituellement commandé par des leviers disposés autour du plateau et qui sont actionnés par la poussée axiale de la butée d'embrayage, elle-même commandée par la fourchette d'embrayage (dans les dispositifs modernes à ressort à diaphragme, la butée agit directement sur la partie du ressort à diaphragme qui joue le rôle de levier). A son tour, la fourchette d'embrayage, qui est un levier, est généralement actionnée par un piston hydraulique qui agit sous la pression d'un liquide envoyé, par l'intermédiaire d'un tuyau, par un maître-cylindre actionné lui-même par la pédale d'embrayage.

Ce mécanisme appliqué universellement a le mérite d'être largement éprouvé. Il présente cependant un inconvénient de taille : l'ensemble formé par la butée, la fourchette et le cylindre de débrayage comprend de nombreuses pièces, qui sont la source aussi bien d'un prix relativement élevé que de nombreux dérèglements; ces dérèglements provoquent des bruits divers et exigent des réglages, ce qui entraîne des dépenses.

Il a été proposé pour remédier à ces inconvénients, divers mécanismes qui sont tous fondés sur le même principe : en lieu et place de la butée classique actionnée par une fourchette, on dispose autour du tube qui entoure l'arbre moteur, un cylindre concentrique à ce tube, dans lequel ou autour duquel coulisse un piston, également concentrique au tube, le piston ou le cylindre agissant sur les leviers qui commandent le mouvement du plateau. Le mouvement relatif du piston et du cylindre est commandé directement par l'introduction de liquide sous pression provenant du maître-cylindre hydraulique actionné par la pédale d'embrayage.

Parmi les diverses solutions de ce genre, on peut citer les demandes de brevet PCT/US87/02641 (publication WO 88/03235), européennes 0 119 784, 0 092 823, françaises FR 7630 128 et les brevets français FR 72 26 979, FR 72 27 764, FR 1 521 148, FR 1 551 796 et FR 1 556 578. La préambule de la revendication 1 comprend les caractéristiques essentielles comprises dans le document antérieur GB 2.112.490.

En règle générale, ces dispositifs sont de construction assez complexe. La plupart présentent ainsi des jupes ou diaphragmes souples assurant l'étanchéité entre le cylindre et le piston, ou vers l'extérieur. Ils exigent en tout cas une adaptation d'au moins une partie de l'embrayage auquel ils sont destinés. Par exemple, le dispositif exposé dans la demande PCT/US87/02641 doit être fixé sur le carter d'embrayage et sur un tube fixe qui entoure l'arbre moteur, ces deux pièces devant être modifiées.

C'est sans doute en raison de cette nécessité d'une modification des pièces produites en grande série, modification qui entraîne des investissements importants, que les dispositifs précités n'ont jamais été montés sur des véhicules de grande diffusion.

L'utilisation de diaphragmes ou membranes pour assurer l'étanchéité entre le cylindre et le piston est aussi une cause de renchérissement de la construction qui a sans doute contribué à freiner la diffusion de tels dispositifs.

La présente invention vise à fournir un dispositif de commande hydraulique d'embrayage sous la forme générale d'un piston et d'un cylindre concentriques à l'arbre moteur et apte à être monté sans modification sur les embrayages existants. L'invention vise en outre à fournir un dispositif de construction simple et par conséquent de faible prix de revient.

Un autre objet de l'invention est de proposer un dispositif de commande d'embrayage compact et autonome avec butée d'embrayage incorporée pouvant être adapté à n'importe quel embrayage existant.

A cet effet, les caractéristiques de l'invention sont décrites dans les revendications. D'autres caractéristiques et avantages de l'invention ressortiront de la description d'une forme d'exécution de l'invention à l'aide des dessins :
La figure 1 est une coupe longitudinale d'un dispositif selon l'invention.
La figure 2 est une coupe transversale selon la ligne A-A du dispositif montré à la figure 1.
La figure 3 est une vue en perspective du dispositif montré à la figure 1, monté sur le tube de la butée d'embrayage, une partie de l'intérieur du dispositif étant montrée en écorché.
La figure 4 est une vue en coupe générale d'un embrayage muni du dispositif de commande objet de l'invention.

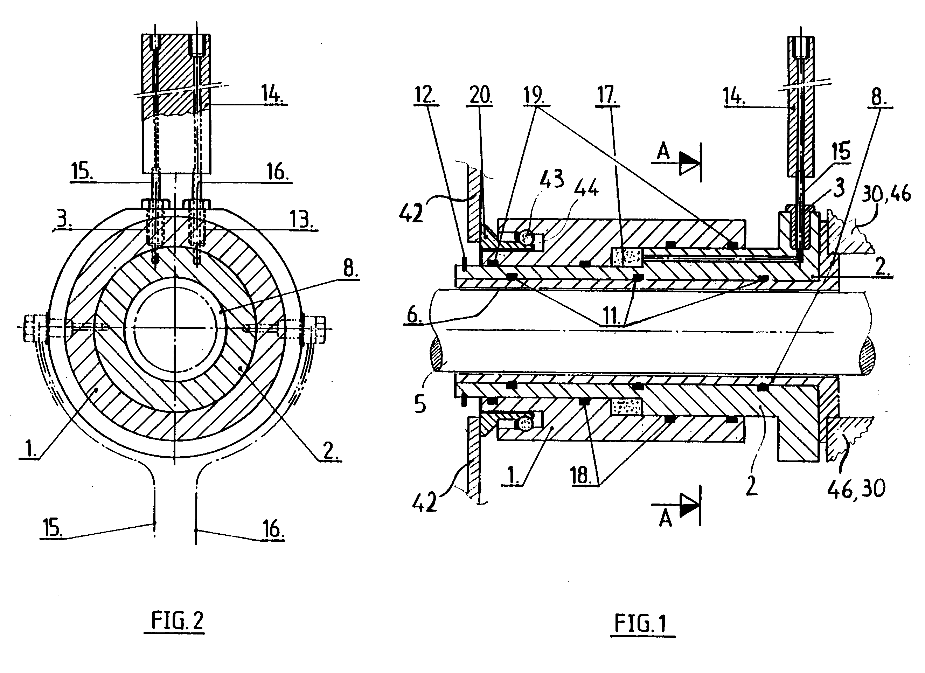

Comme montré aux figures 1,2 et 3, le dispositif comprend un cylindre 2, sur lequel peut coulisser un piston 1. Le cylindre 2 aussi bien que le piston 1 sont ouverts aux deux bouts.

Le cylindre 2 présente deux diamètres extérieurs différents correspondant aux deux diamètres intérieurs du piston 1.

Une chambre 17 est formée entre les deux diamètres différents du piston et du cylindre 2.

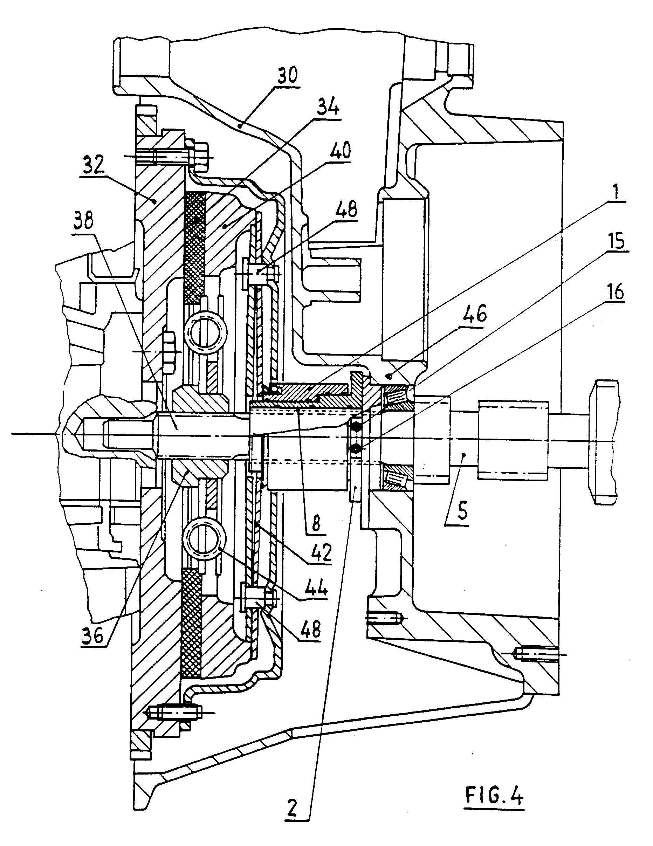

Le cylindre 2 présente un alésage central 6 par où passe l'arbre mené ou arbre primaire de la boîte à vitesses 5 (voir figure 4).

Le cylindre 2 présente une ouverture latérale 3, qui est destinée à recevoir l'embout d'une conduite d'amenée 15 de liquide reliée au maître-cylindre (non représente) actionné par la pédale d'embrayage. Le cylindre 2 présente en outre une seconde ouverture latérale de purge 13 reliée à une conduite de purge 16.

La chambre 17 est en communication avec l'ouverture 3 pour l'amenée de liquide sous pression et avec ouverture 13 reliée à la conduite de purge 16.

En position fermée, cette chambre 17 est de volume restreint. La pression du fluide introduit par l'ouverture 3 dans la chambre pousse le piston 1 en augmentant le volume de cette chambre.

Le cylindre 2 s'appuie par son extrémité en forme de collerette sur le carter d'embrayage ou une pièce fixe solidaire du carter d'embrayage. A l'opposé, le bout du piston 1 s'appuie, par l'intermédiaire d'une bague 20 montée sur roulement à billes, sur les leviers qui permettent d'écarter du disque le plateau d'embrayage, ou sur le ressort à diaphragme qui est utilisé dans de nombreux embrayages modernes.

L'injection du liquide sous l'action du maître-cylindre entraîne l'écartement du piston 1 et du cylindre 2 et par conséquent celui du plateau et du disque d'embrayage.

Le dispositif objet de l'invention est aisé à réaliser et pratique à poser. En effet, le piston 1 et le cylindre 2 sont tous deux des cylindres de révolution. Il en va de même du passage 6 pratiqué pour l'arbre rotatif, qui est également en forme de cylindre de révolution et qui est concentrique au piston et au cylindre.

Dans une forme d'exécution préférée, la conduite d'amenée 15 et la conduite de purge 16 se rejoignent dans un élément rigide 14, qui présente deux canaux. L'un des canaux reçoit la conduite d'amenée 15 de liquide, et l'autre la conduite de purge 16. L'élément rigide 14 est conformé de façon à s'adapter aisément à une ouverture déjà existante dans le carter d'embrayage, et de préférence à l'ouverture ménagée pour le passage de la fourchette d'embrayage. Un avantage de ce montage est que l'élément rigide 14 agit comme levier d'arrêt empêchant tout mouvement de rotation de l'ensemble 1,2.

Afin d'assurer l'étanchéité entre le piston 1 et le cylindre 2, deux O-rings 18 sont prévus. Ils assurent une étanchéité suffisante, tout en coûtant nettement moins cher que les diaphragmes souples prévus dans plusieurs documents cités plus haut. De préférence, ils ont une section ronde.

Le dispositif peut aisément remplacer l'ensemble formé par la butée et la fourchette dans la plupart des embrayages qui sont sur le marché. Il est possible d'utiliser le dispositif objet de l'invention aussi bien lors de la fabrication en usine des embrayages que pour le placer a posteriori sur des voitures qui sont déjà en circulation.

Afin de pouvoir transporter aisément l'ensemble du dispositif et d'éviter que le piston 1 glisse hors du cylindre 2, une gorge annulaire extérieure est pratiquée à l'extrémité du cylindre 2, par laquelle a été introduit le piston 1.

Dans cette gorge est fixé un anneau 12 qui déborde de la gorge, son diamètre extérieur étant supérieur au diamètre intérieur du cylindre 2 et empêche le piston 1 de ressortir du cylindre 2.

Les joints élastiques tels que des O-rings 11 sont prévus dans des gorges à l'intérieur de l'alésage 6 et permettent le montage aisé sur le tube 8 généralement prévu pour monter une butée à fourchette classique.

Une fois mis en place, le dispositif de commande se positionne et est maintenu contre la paroi du carter par la poussée du ressort à diaphragme contre la bague 20.

Un autre avantage des joints 11 est qu'ils permettent d'amortir les vibrations dans l'ensemble.

Il n'est pas nécessaire de prévoir d'autres moyens de fixation du dispositif : il suffit de le glisser tel quel sur le tube qui entoure l'arbre moteur et qui existe déjà.

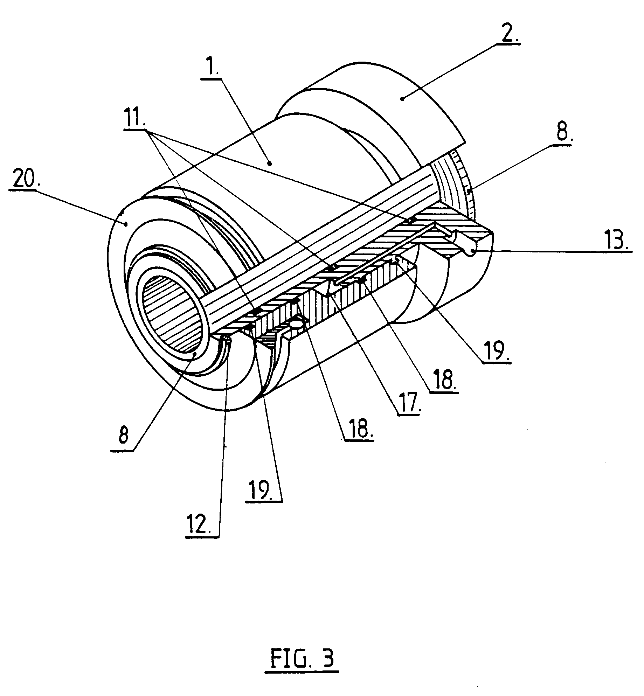

Comme montré sur les figures 1 et 3, l'extrémité libre du piston 1 est avantageusement muni d'une garniture de roulement à billes pourvue d'une bague d'appui 20 pouvant faire office de butée d'embrayage. La butée d'embrayage devient donc une partie intégrale du dispositif de commande selon l'invention.

Le dispositif de commande faisant office de piston produit ainsi un double rôle car il fait également office de roulement ce qui procure l'avantage de supprimer l'apport d'une butée d'embrayage.

Pour augmenter l'efficacité et la sécurité d'emploi du dispositif objet de l'invention on peut encore ajouter un complément de deux "O-rings" 19 disposés vers les extrémités du piston 1 afin de protéger l'ensemble contre toute infiltration de poussières.

Comme montré sur la figure 4, le carter d'embrayage 30 contient un volant 32 entraîné par le vilebrequin du moteur, un disque 34 muni d'une garniture de friction monté sur un noyeu cannelé 36 pouvant se déplacer axiallement sur une partie cannelée 38 de l'arbre primaire 5 de la boîte à vitesses, un plateau de pression mobile 40 monté sur un ressort à diaphragme 42 et un palier d'extrémité 46 par où passe l'arbre 5.

Le dispositif de commande objet de la présente invention est disposé entre le palier d'extrémité 46 du carter 30 et le ressort à diaphragme 42 et est monté sur le tube 8 enveloppant l'arbre 5.

En position normale, la plaque de pression 40 appuie le disque de friction 34 contre le volant 32 sous l'action du ressort à diaphragme 42.

La rotation du volant 32 entraîné par le moteur est alors transmise à l'arbre 5 par l'intermédiaire du disque de friction 34, des ressorts amortisseurs 44 et le moyeu cannelé 36.

Si on appuie sur la pédale d'embrayage, le maître-cylindre envoie du liquide sous pression par la conduite 15 dans la chambre 17 et le piston 1, s'écarte du cylindre 2. Le cylindre 2 prennant appui contre le palier d'extrémité 46 du carter d'embrayage 30, le piston 1 appuie au moyen de la bague 20, de roulement monté à l'extrémité libre du piston 1, contre la partie centrale du ressort à diaphragme 42 qui bascule autour des points d'appui 48 ce qui provoque le recul du plateau de pression 40 et libère le disque de friction 34 éliminant ainsi toute transmission de mouvement de rotation du volant moteur 32 vers l'arbre primaire 5 de la boîte à vitesses.

Lorsqu'on arrête d'appuyer sur la pédale d'embrayage la pression est supprimée dans la chambre 17, le liquide s'évacue par la conduite de purge 16 et le piston 1 revient dans sa position initiale aidé par la poussée du ressort à diaphragme 42 sur la bague 20 du piston 1.

Le dispositif conforme à l'invention présente des avantages importants par rapport aux commandes existantes car il permet :
- une construction facile et économique de l'ensemble;
- le montage interchangeable sans modification des pièces existantes en supprimant les éléments classiques tels que : fourchette, butée, axe pivotement fourchette, tige de commande et cylindre récepteur hydraulique;
- le montage rapide et efficace par simple glissement sur le tube de butée existant sans autres moyens de fixation;
- la suppression de la butée habituelle en incorporant une garniture de roulement à billes avec bague de pression dans l'extrémité libre du piston;
- le raccordement des tuyauteries hydrauliques du dispositif de commande par les ouvertures existantes dans le carter de l'embrayage;
- d'obtenir un ensemble compact et autonome pouvant être adapté à n'importe quel embrayage existant.

Bien sûr d'autres formes de réalisation que celles décrites restent possibles sans sortir du cadre de la présente invention.

## Revendications

1. Dispositif de commande d'un embrayage à friction comprenant au moins deux pièces rotatives (32,34) aptes à être plaquées l'une contre l'autre ou séparées à volonté, l'embrayage comprenant en outre un tube (8) destiné à porter une butée classique d'embrayage, le tube entourant concentriquement un arbre rotatif (5) relié à au moins une (34) des deux parties rotatives, le tube (8) prenant appui d'un côté, sur la paroi intérieure (46) d'un carter d'embrayage (30), le dispositif de commande comprenant un cylindre (2) et un piston (1) pouvant coulisser sur le cylindre délimitant entre eux une chambre (17) en communication avec au moins une ouverture permettant d'amener un fluide sous pression dans le cylindre au moyen d'un maître-cylindre, le cylindre (2) présente un alésage central (6) qui le traverse de part en part et qui est d'un diamètre sensiblement égal au diamètre extérieur du tube (8), le cylindre (2), le piston (1) et l'alésage central (6) étant concentriques, l'ensemble formé par le cylindre et le piston étant de dimensions telles qu'il est apte à être glissé sur le tube (8) de façon à prendre appui d'un côté contre le carter d'embrayage (30), et de l'autre côté contre une (42) ou des pièces mobiles reliées à au moins une (40) des deux pièces rotatives (32), l'introduction dans le cylindre (2) d'un liquide sous pression étant apte à faire coulisser le piston (1) sur le cylindre (2) et à mettre en mouvement la (42) ou les pièces mobiles et à provoquer ainsi la séparation des deux pièces rotatives (32,34), l'ensemble formé par le cylindre (2) et le piston (1) étant positionné et maintenu sur le tube (8) entourant l'arbre (5), caractérisé en ce que le cylindre (2) présente à l'intérieur de l'alésage central (6) des gorges circulaires dans lesquelles sont placés des joints élastiques (11) permettant le montage et le maintien du dispositif sur le tube (8) en éliminant les vibrations et en ce que dans l'extrémité libre du piston (1) est incorporée une garniture de roulement à billes pourvue d'une bague d'appui (20) faisant office de butée d'embrayage.

2. Dispositif selon la revendication 1, caractérisé en ce que l'étanchéité entre le piston (1) et le cylindre (2) est assurée par au moins deux joints élastiques circulaires (O-rings) (18).

3. Dispositif selon la revendication 1, caractérisé en ce que on prévoit des joints élastiques (O-rings) (19) comme protection contre les poussières disposés entre le piston (1) et le cylindre (2) et vers les côtés extérieurs du piston (1).

4. Dispositif selon les revendications de 1 à 3, caractérisé en ce que les joints élastiques circulaires (O-rings) (11,18,19) ont une section ronde.

5. Dispositif de commande selon la revendication 1, caractérisé en ce que le cylindre (2) présente à son extrémité libre, une gorge annulaire extérieure dans laquelle est fixé un anneau (12) qui déborde de la gorge, son diamètre extérieur étant supérieur au diamètre intérieur du piston (1), l'anneau (12) étant ainsi apte à empêcher le piston (1) de ressortir du cylindre (2).

6. Dispositif selon la revendication 1, caractérisé en ce que la chambre (17) formée entre le cylindre (2) et le piston (1) comprend au moins une conduite d'arrivée (15) du fluide sous pression et une conduite de purge (16) et des moyens permettant de relier les embouts de chaque conduite à un canal différent.

7. Dispositif selon les revendications 1 et 6, caractérisé en ce que la conduite d'arrivée (15) et la conduite de purge (16) sont reliées à un élément rigide (14) traversé de deux canaux au moins, l'élément rigide (14) étant conformé de manière à s'adapter à une ouverture préexistante du carter d'embrayage en évitant ainsi tout mouvement de rotation de l'ensemble (1,2) sur le tube (8).

## Claims

1. A device for controlling a friction clutch comprising at least two rotating parts (32, 34) suitable for being placed against each other or separated as desired, the clutch additionally comprising a tube (8) intended to support a classical clutch thrust bearing, the tube concentrically surrounding a rotating shaft (5) attached to at least one (34) of the two rotating parts, the tube (8) being supported on one side on the internal wall (46) of a clutch housing (30), the control device comprising a cylinder (2) and a piston (1) which can slide on the cylinder, delimiting between them a chamber (17) communicating with at least one opening enabling a fluid under pressure to be brought into the cylinder by means of a master cylinder, the cylinder (2) having a central bore (6) which crosses it throughout and which has a diameter substantially equal to the outside diameter of the tube (8), the cylinder (2), the piston (1) and the central bore (6) being concentric, the assembly formed by the cylinder and the piston being of dimensions such that it is suitable to be slid on to the tube (8) so as to be supported on one side against the clutch housing (30), and on the other side against a movable part (42) or parts attached to at least one (40) of the two rotating parts (32), the introduction into the cylinder (2) of a liquid under pressure being suitable for causing the piston (1) to slide on the cylinder (2) and to set in motion the movable part (42) or parts and thus to cause the separation of the two rotating parts (32, 34), the assembly formed by the cylinder (2) and the piston (1) being positioned and maintained on the tube (8) surrounding the shaft (5), characterised in that the cylinder (2) has circular grooves inside the central bore (6) in which resilient packings (11) are placed which permit the device to be mounted and held on the tube (8) whilst eliminating vibrations, and that a ball bearing fitting provided with a support ring (20) acting as a clutch thrust bearing is incorporated in the free end of the piston (1).

2. A device according to claim 1, characterised in that the seal between the piston (1) and the cylinder (2) is accomplished by at least two resilient circular packings (O-rings) (18).

3. A device according to claim 1, characterised in that resilient packings (O-rings) (19) situated between the piston (1) and the cylinder (2) and towards the external sides of the piston (1) are provided as protection from dust.

4. A device according to claims 1 to 3, characterised in that the circular resilient packings (O-rings) (11, 18, 19) have a round cross-section.

5. A control device according to claim 1 characterised in that the cylinder (2) has an external annular groove at its free end, in which there is fixed a collar (12) which projects from the groove, the outside diameter of the collar being greater than the inside diameter of the piston (1), the collar (12) thus being suitable for preventing the piston (1) from coming out of the cylinder (2).

6. A device according to claim 1, characterised in that the chamber (17) formed between the cylinder (2) and the piston (1) comprises at least one inlet duct (15) for the fluid under pressure and one drain duct (16) and means permitting the joining pieces of each duct to be connected to a different channel.

7. A device according to claims 1 to 6, characterised in that the inlet duct (15) and the drain duct (16) are connected to a rigid element (14) crossed by at least two channels, the rigid element (14) being formed so that it fits a pre-existing opening in the clutch housing, thus preventing any rotational movement of the assembly (1, 2) on the tube (8).

## Patentansprüche

1. Betätigungseinrichtung für eine Reibungskupplung umfassend mindestens zwei Rotationsteile (32,34), die geeignet sind, beliebig gegeneinander gesetzt oder getrennt zu werden, wobei die Kupplung außerdem ein Rohr (8) aufweist, das vorgesehen ist, einen klassischen Kupplungsanschlag zu tragen, wobei das Rohr eine mit mindestens einem (34) der beiden Rotationsteile verbundene Rotationsachse (5) konzentrisch umgibt, wobei das Rohr (8) sich auf einer Seite auf die Innenwand (46) eines Kupplungsgehäuses (30) stützt, wobei die Betätigungseinrichtung einen Zylinder (2) aufweist und einen Kolben (1), der sich auf dem Zylinder verschieben läßt, wobei sie zwischen sich eine Kammer (17) abgrenzen, die mit mindestens einer Öffnung in Verbindung steht, die erlaubt, ein unter Druck stehendes Fluid mittels eines Hauptzylinders in den Zylinder zu bringen, der Zylinder (2) besitzt eine zentrale Bohrung (6), die ihn vollkommen durchquert und die einen dem Außendurchmesser des Rohres (8) annähernd gleichen Durchmesser aufweist, wobei der Zylinder (2), der Kolben (1) und die zentrale Bohrung (6) konzentrisch sind, wobei die durch den Zylinder und den Kolben gebildete Anordnung solche Abmessungen aufweist, daß sie zum Aufschieben auf das Rohr (8) geeignet ist, so daß sie sich auf einer Seite auf das Kupplungsgehäuse (30) stützt und auf der anderen Seite auf eines (42) oder mehrere bewegliche Teile, die mit mindestens einem (40) der beiden Rotationsteile (32) verbunden sind, wobei die Einführung einer unter Druck stehenden Flüssigkeit in den Zylinder (2) geeignet ist, den Kolben (1) auf dem Zylinder (2) zu verschieben und das (42) oder die beweglichen Teile in Bewegung zu setzen und so die Trennung der beiden Rotationsteile (32,34) zu provozieren, wobei die durch den Zylinder (2) und den Kolben (1) gebildete Anordnung auf dem die Achse (5) umgebenden Rohr (8) positioniert und gehalten ist, dadurch gekennzeichnet, daß der Zylinder (2) im Inneren der zentralen Bohrung (6) kreisförmige Vertiefungen aufweist, in die elastische Dichtungen (11) eingebracht sind, die es erlauben, die Vorrichtung auf dem Rohr (8) anzubringen und zu halten und Vibrationen zu eliminieren, und daß in das freie Ende des Kolbens (1) ein mit einem Stützring (20) versehenes Kugellager eingebracht ist, das als Kupplungsanschlag dient.

2. Einrichtung nach Anspruch 1, dadurch gekennzeichnet, daß die Dichtigkeit zwischen dem Kolben (1) und dem Zylinder (2) durch mindestens zwei kreisförmige elastische Dichtungen (O-Ringe) (18) sichergestellt ist.

3. Einrichtung nach Anspruch 1, dadurch gekennzeichnet, daß elastische Dichtungen (O-Ringe) (19) als Schutz gegen die Stäube vorgesehen sind, die sich zwischen dem Kolben (1) und dem Zylinder (2) und gegen die Außenseiten des Kolbens (1) befinden.

4. Einrichtung nach einem der Ansprüche 1 bis 3, dadurch gekennzeichnet, daß die kreisförmigen elastischen Dichtungen (O-Ringe) (11,18,19) einen runden Querschnitt aufweisen.

5. Einrichtung nach Anspruch 1, dadurch gekennzeichnet, daß der Zylinder (2) an seinem freien Ende eine ringförmige äußere Vertiefung aufweist, in der ein Ring (12) fixiert ist, der über die Vertiefung übersteht, wobei sein Außendurchmesser größer ist als der Innendurchmesser des Kolbens (1), so daß der Ring (12) geeignet ist, den Kolben (1) daran zu hindern, aus dem Zylinder (2) auszutreten.

6. Einrichtung nach Anspruch 1, dadurch gekennzeichnet, daß die zwischen dem Zylinder (2) und dem Kolben (1) gebildete Kammer (17) mindestens eine Zufuhrleitung (15) für unter Druck stehendes Fluid und eine Abflußleitung (16) aufweist und Mittel, die es erlauben, die Ansatzstücke jeder Leitung mit einem unterschiedlichen Kanal zu verbinden.

7. Einrichtung nach den Ansprüchen 1 und 6, dadurch gekennzeichnet, daß die Zufuhrleitung (15) und die Abflußleitung (16) mit einem starren Element (14) verbunden sind, das von mindestens zwei Kanälen durchquert wird, wobei das starre Element (14) so ausgebildet ist, daß es sich an eine vorhandene Öffnung des Kupplungsgehäuses anpaßt und so jede Drehbewegung der Anordnung (1,2) auf dem Rohr (8) vermeidet.
